# EUROPÄISCHE PATENTSCHRIFT

(11) **EP 3 101 365 B1**
(45) Veröffentlichungstag und Bekanntmachung des Hinweises auf die Patenterteilung: **04.12.2019**
(21) Anmeldenummer: 15170330.3
(22) Anmeldetag: 02.06.2015
(51) Int. Cl.: F24H 3/04, B60H 1/22, H05B 3/50

(54) **VERFAHREN ZUR HERSTELLUNG EINER ELEKTRISCHEN HEIZVORRICHTUNG**
METHOD FOR PRODUCING AN ELECTRICAL HEATING DEVICE
PROCÉDÉ DE FABRICATION D'UN DISPOSITIF DE CHAUFFAGE ÉLECTRIQUE

(43) Veröffentlichungstag der Anmeldung: 07.12.2016
(73) Patentinhaber: Eberspächer catem GmbH & Co. KG, 76863 Herxheim (DE)
(72) Erfinder: Bohlender, Franz, 76870 Kandel (DE); Kachelhoffer, Patrick, 67160 Seebach (FR); Niederer, Michael, 76889 Kapellen-Drusweiler (DE); Schwarzer, Andreas, 60433 Frankfurt am Main (DE); Walz, Kurt, 76767 Hagenbach (DE)
(74) Vertreter: Grünecker Patent- und Rechtsanwälte PartG mbB

(56) Entgegenhaltungen:
- EP-A1- 1 872 986
- EP-A1- 2 211 590
- EP-A1- 2 397 788
- EP-A1- 2 428 746
- EP-A1- 2 440 004
- EP-A1- 2 637 475
- WO-A1-91/07068
- CN-U- 204 180 283
- DE-A1- 2 845 894
- DE-A1- 2 948 593
- DE-U1- 8 230 799

## Beschreibung

Die vorliegende Erfindung betrifft ein Verfahren zur Herstellung einer elektrischen Heizvorrichtung, insbesondere für ein Kraftfahrzeug, bei dem ein PTC-Heizelement mit zumindest einem PTC-Element, das zwischen Leiterbahnen vorgesehen ist, in eine U-förmige Ausnehmung eines Heizergehäuses eingesetzt und wärmeleitend mit gegenüberliegenden Innenflächen der U-förmigen Ausnehmung kontaktiert wird.

Eine elektrische Heizvorrichtung mit einem Heizergehäuse, welches eine U-förmige Ausnehmung vorgibt, in welche ein PTC-Element wärmeleitend einbringbar ist, ist beispielsweise in der WO 91/07068 A1, EP 1 872 989 A1 bzw. der EP 1 921 896 beschrieben. Ein PTC-Heizelement, welches als separates Heizelement zunächst vorbereitet und danach in die U-förmige Ausnehmung eingebracht wird, ist beispielsweise in der EP 2 637 475 A1 beschrieben. Nach WO 91/07068 A1 ist die Ausnehmung konisch zulaufend in einem Metallprofil ausgebildet, in die ein keilförmiges PTC-Element eingesetzt ist, das beidseitig an plättchenförmigen Isolierkörpern anliegt, die unter Zwischenlage einer erstarrten wärmeleitenden elektrisch isolierenden Masse gegen das Metallprofil anliegen, wobei die Masse auch einen das PTC-Element abdeckenden Haltekörper ausgebildet.

Derartige elektrische Heizvorrichtungen dienen der Erwärmung eines flüssigen Fluides. Sie kommen vor allem in Elektrofahrzeugen zur Anwendung, bei denen keine erhebliche Prozesswärme erzeugt wird, mit welchem der Fahrgastinnenraum oder andere Komponenten des Fahrzeuges erwärmt werden können. Abwärme wie bei einem Verbrennungsmotor wird in einem elektrischen Motor nicht erzeugt. So muss Prozesswärme elektrisch erzeugt werden. Diese Prozesswärme wird beispielsweise genutzt, um den Innenraum des Kraftfahrzeuges zu klimatisieren. Es kann aber auch notwendig sein, bestimmte Aggregate, beispielsweise den Akkumulator des Fahrzeuges zu heizen, um die gewünschte elektrische Energie aus dem Akkumulator gewinnen zu können.

Bei den vorbekannten Heizvorrichtungen wird das elektrische Heizelement üblicherweise vorbereitet, in dem das wenigstens eine PTC-Heizelement zwischen sich gegenüberliegenden Kontaktplatten angeordnet wird. Diese Einheit wird in die U-förmige Ausnehmung des Heizergehäuses eingesetzt. Nach der Lehre von EP 1 921 896 A1 und der EP 2 637 475 A1 wird das PTC-Element mit den beidseitig daran anliegenden Kontaktblechen zunächst in einem PTC-Heizgehäuse, welches als Kunststoffteil ausgebildet ist, eingelegt und hiermit verbunden. Dieses Gehäuse hat auch eine seitliche Führung für ein Keilelement, welches nach Einbringen des PTC-Heizgehäuses in die U-förmige Ausnehmung des Heizergehäuses eingeschoben wird, um das bzw. die PTC-Elemente thermisch leitend mit den Innenwandungen der U-förmigen Ausnehmung zu kontaktieren und somit einen guten Wärmeaustrag der von den PTC-Elementen erzeugten Wärme zu gewährleisten. Die durch das Keilelement erzeugte Klemmkraft drückt dabei regelmäßig auch die Kontaktbleche als Leiterbahnen gegen die gegenüberliegenden Seitenflächen des PTC-Elementes und sorgt somit für eine sichere Kontaktierung und Einleitung des Leistungsstromes in das PTC-Element.

PTC-Elemente werden auch als Kaltleiterelemente bezeichnet, da der elektrische Widerstand des PTC-Elementes mit zunehmender Temperatur steigt. Diese selbstregelnden Eigenschaften des PTC-Elementes bedingen eine sehr gute Auskopplung der von den PTC-Elementen erzeugten Wärme. Andernfalls kann das PTC-Element die gewünschte Wärmeleistung nicht erzeugen.

So sieht die folgende Erfindung weiteren Bedarf an einer wärmemäßigen Optimierung der zuvor beschriebenen Einbausituation des PTC-Heizelementes in einer U-förmigen Ausnehmung und will ein Verfahren zu einer verbesserten Herstellung einer entsprechenden elektrischen Heizvorrichtung und eine wärmemäßig verbesserte elektrische Heizvorrichtung angeben.

Zur Lösung dieses Problems wird mit der vorliegenden Erfindung ein Verfahren zur Herstellung einer elektrischen Heizvorrichtung mit den Merkmalen von Anspruch 1 angegeben.

Das erfindungsgemäße Verfahren wird in an sich bekannter Weise an einem Heizergehäuse mit zumindest einer U-förmigen Ausnehmung durchgeführt. Diese U-förmige Ausnehmung ragt in eine Zirkulationskammer hinein, die innerhalb des Gehäuses vorgesehen und regelmäßig über zwei Wasseranschlüsse an einen Wasserzirkulationskreislauf anschließbar ist. Die Anschlüsse sind regelmäßig durch Stutzen gebildet, die an dem Heizergehäuse vorgesehen sind. Die U-förmige Ausnehmung öffnet sich in üblicher Weise zu einer Anschlusskammer, wie grundsätzlich in EP 1 921 896 A1 beschrieben. Dort werden regelmäßig mehrere PTC-Heizelemente elektrisch an eine Leiterplatte oder an eine verschiedene PTC-Heizelemente miteinander gruppierende Anschlussleiterplatte, die keine elektrischen Bauelemente aufweist, angeschlossen. Zwischen der Anschlusskammer und der Zirkulationskammer ist eine Trennwand vorgesehen. Von dieser Trennwand ragen die U-förmigen Ausnehmungen regelmäßig in die Zirkulationskammer herein. Insofern macht die vorliegende Erfindung von herkömmlicher Ausgestaltung eines elektrischen Heizers zur Flüssigkeitserwärmung in einem Kraftfahrzeug Gebrauch. Dabei wird das PTC-Element vorzugsweise in an sich bekannter Weise über einen Keil in der U-förmigen Ausnehmung verkeilt, sodass die Hauptseitenflächen des PTC-Elementes bzw. der PTC-Elemente und die daran außenseitig anliegenden Leiterbahnen flächig an den wärmeabgebenden Gegenflächen, d.h. den Innenflächen der U-förmigen Ausnehmung anliegen. So wird bei dem erfindungsgemäßen Vorgehen zunächst das PTC-Heizelement in die U-förmige Ausnehmung eingebracht, danach üblicherweise durch Vorschieben des Keilelementes in der U-förmigen Ausnehmung verspannt und danach eine wärmeleitende Masse in die U-förmige Ausnehmung eingebracht. Bei dieser wärmeleitenden Masse handelt es sich vorzugsweise um eine elektrisch isolierende Masse.

Mit dem erfindungsgemäßen Verfahren wird insbesondere der Zwischenraum zwischen Stirnflächen der U-förmigen Ausnehmung und den zugeordneten Stirnflächen des PTC-Heizelementes mit der wärmeleitenden Masse ausgefüllt. So sollte die U-förmige Ausnehmung vorzugsweise durch eine Heizrippe ausgebildet werden, die vollumfänglich von dem zu erwärmenden Fluid umströmt wird, d.h. ohne randseitige Anbindung in eine an sich bekannte Zirkulationskammer des Heizergehäuses hineinragen. So überstreicht das zu erwärmende Fluid nicht nur die Hauptseitenflächen der Heizrippen, die sich üblicherweise parallel zu den Innenflächen der U-förmigen Ausnehmung erstrecken, sondern auch die sich rechtwinklig hierzu erstreckenden Stirnflächen der Heizrippe. Damit ist ein guter Wärmeaustrag zu allen Seiten der Heizrippe ermöglicht. Der Abstand zwischen dem PTC-Heizelement, insbesondere der Abstand zwischen dem PTC-Element und dem bündig damit endenden Leiterbahnen und den gegenüberliegenden Wänden der U-förmigen Ausnehmung sollte bei zwischen 2,5 und 4 mm liegen.

Die Masse umfasst als Flüssigphase üblicherweise eine Silikonmasse. Bevorzugt ist die Flüssigphase durch ein additionsvernetzendes 2-Komponenten-Silikon gebildet, dass bei Raumtemperatur aushärtet und unter Wärme forciert aushärtet. Die Masse hat eine Viskosität bei 25° C von zwischen 100 und 200 Pa s. Mit Blick auf eine gute Fließfähigkeit wird dem 2-Kompontenen-Silikon üblicherweise Benzin oder Tuluol als Verdünner beigemischt, um bei 25° C eine Viskosität in einem Bereich von zwischen 4 und 15, vorzugsweise von zwischen 5 und 8 Pa s zu erhalten. Die Wärmeleitfähigkeit der Masse (Flüssigphase + Partikel) liegt regelmäßig bei zwischen 3,0 und 5,0 W/(m K). Im vernetzten Zustand sollte der die Flüssigphase ausbildende Bestandteil der Masse eine Härte Shore A von etwa 10-40 und eine Durchschlagsfestigkeit CTI > 600 haben. Dieser Flüssigphase ist üblicherweise ein vorbestimmter Feststoffanteil mit hoher Wärmeleitfähigkeit beigemischt. Die Wärmeleitfähigkeit des Füllstoffanteils sollte bei zwischen 20 und 30 W(m K) liegen. Der Füllstoff ist vorzugsweise Aluminiumoxid. Mit Blick auf gute Fließeigenschaften wird sphärisches Aluminiumoxid mit einer mittleren Korngröße von ca. 4 -6 µm bevorzugt. Die größten Körner sind üblicherweise nicht größer als 20 µm. Mit Blick auf eine gute Wärmeleitfähigkeit der Masse (Flüssigphase + Füllstoffanteil) hat die Masse einen Füllstoffanteil von zumindest 50 Vol.- %, besonders bevorzugt von zwischen 85 und 95 Vol.-%.

Erfindungsgemäß wird die wärmeleitende- und elektrisch isolierende Masse zwischen das PTC-Element und den Stirnflächen der U-förmigen Ausnehmung eingebracht. Eingebracht bedeutet hierbei vorzugsweise, dass die Masse direkt in diesen Zwischenraum eingefüllt wird. Insbesondere beim Verkeilen des PTC-Elementes in der U-förmigen Ausnehmung wird die wärmeleitende Masse dabei üblicherweise in einen Zwischenraum zwischen der Stirnfläche und dem PTC-Element eingebracht, fließt unterhalb des PTC-Elementes und entlang des Bodens auf die gegenüberliegende Seite zu dem dort befindlichen Zwischenraum zwischen der Stirnfläche und dem PTC-Element und füllt auch hier den Zwischenraum aus. Dabei drängt die eingefüllte wärmeleitende Masse Luft auf der gegenüberliegenden Seite aus der U-förmigen Ausnehmung heraus.

Üblicherweise ist das PTC-Heizelement oberseitig mit Anschlussfahnen versehen, die in einer Anschlusskammer freiliegen. Diese Anschlussfahnen werden regelmäßig durch Stanzen von Blechplatten ausgebildet, die die Leiterbahnen ausformen und welche gegen das wenigstens eine PTC-Element elektrisch leitend angelegt sind. Es gibt verschiedene Möglichkeiten, das PTC-Heizelement in der U-förmigen Ausnehmung zu positionieren. So kann das PTC-Heizelement oberseitig mit einem Flansch verbunden sein, der an eine Trennwand angelegt wird. Üblicherweise haben die Trennwand und der Flansch einander zugeordnete Anschläge bzw. Positionierhilfen. Alternativ kann das PTC-Heizelement auch mit einem Gleitblech verbunden sein, welches mit Abstandshaltern versehen ist, aufgrund derer eine Positionierung des PTC-Heizelementes mit dem Gleitblech in der U-förmigen Ausnehmung erfolgt. Dabei überragen die Abstandshalter regelmäßig beidseitig das Gleitblech und wirken dementsprechend mit einer Innenfläche der U-förmigen Ausnehmung so zusammen, dass zwischen dieser Innenfläche und dem PTC-Heizelement ein Aufnahmeraum für ein Keilelement zum Verspannen des PTC-Heizelements in der U-förmigen Ausnehmung freigedrückt wird. Die Innenfläche der U-förmigen Ausnehmung kann mit Führungsrillen versehen sein, die den einzelnen Abstandshaltern zugeordnet sind, sodass auch eine Positionierung quer zu der Längserstreckung der U-förmigen Ausnehmung erfolgt.

Nachdem das PTC-Heizelement in dieser Weise in der Ausnehmung positioniert ist, wird üblicherweise das Keilelement eingebracht, um das PTC-Heizelement in der Ausnehmung zu verspannen.

Die zuvor bereits diskutierte Entlüftung erfolgt dabei üblicherweise durch eine Entlüftungsöffnung, die seitlich zu dem PTC-Heizelement ausgespart ist. So befinden sich an beiden Stirnseiten des PTC-Heizelementes zwei Öffnungen, nämlich eine Einbringöffnung zum Einbringen der wärmeleitenden Masse und eine Entlüftungsöffnung zum Herauslassen derjenigen Luft, die vor der eindringenden wärmeleitenden Masse hergeschoben und ausgetrieben wird.

Wie bereits zuvor erwähnt vernetzt die wärmeleitende Masse vorzugsweise in der U-förmigen Ausnehmung. So ist die wärmeleitende Masse nach der Herstellung der elektrischen Heizvorrichtung abgebunden und kann nicht mehr verloren gehen. Vorzugsweise wird das Vernetzen beschleunigt, indem das PTC-Heizelement bestromt wird. Die hierdurch sich ergebende Wärme wird genutzt, um die wärmeleitfähige Masse beschleunigt zu vernetzen. So wird vorzugsweise die elektrische Heizvorrichtung vor dem Ausliefern erstmalig betrieben, um verbleibende unvernetzte Anteile zu vernetzen und/oder ein beschleunigtes Aushärten bzw. Trocknen der wärmeleitenden Masse zu erreichen.

Gemäß einer bevorzugten Weiterbildung der Erfindung wird das PTC-Heizelement in einem vorbestimmten Abstand zu zumindest einer der Innenfläche gehalten, bevor die Masse in die U-förmige Ausnehmung eingebracht wird. Dabei wird davon ausgegangen, dass das PTC-Heizelement ohnehin nach dem Einbringen in die U-förmige Ausnehmung durch Anlage gegen eine der Innenflächen einseitig hinsichtlich der Lage vorbestimmt ist. Zu der gegenüberliegenden Seite hin wird das PTC-Heizelement beispielsweise durch den zuvor erwähnten Keil in einem vorbestimmten Abstand gehalten. Es werden aber auch Maßnahmen vorzugsweise ergriffen, die dafür Sorge tragen, dass das PTC-Heizelement vor dem Einbringen des Keils in vorbestimmter Weise relativ zu gegenüberliegenden Innenflächen der U-förmigen Ausnehmung positioniert ist. So liegt das PTC-Heizelement vorzugsweise vollflächig an einer Innenfläche der U-förmigen Ausnehmung an, wohingegen zwischen dem PTC-Heizelement und der gegenüberliegenden Innenfläche Platzhalter vorgesehen sind, die beispielsweise den Freiraum für das spätere Einbringen eines Keilelementes frei lassen. So wird gemäß einer bevorzugten Weiterbildung vorgeschlagen, das PTC-Heizelement durch zumindest ein Federelement auf einem vorbestimmten Abstand zu der Innenfläche der U-förmigen Ausnehmung zu halten. Ein solches Federelement kann beispielsweise durch eine Stanzbiegebearbeitung eines für das Keilelement vorgesehenen Gleitbleches ausgebildet sein, welches zwischen der Innenfläche und dem PTC-Heizelement zur Anordnung gelangt, um ein sicheres und zerstörungsfreies Abgleiten des Keilelementes beim Einbringen in die U-förmige Ausnehmung zu gewährleisten.

Wie zuvor erwähnt, wird beim Einbringen des PTC-Heizelementes in die U-förmige Ausnehmung dafür gesorgt, dass das PTC-Heizelement mit vorbestimmter Ausrichtung relativ zu den Innenflächen und insbesondere den Stirnflächen der U-förmigen Ausnehmung angeordnet wird. Der zuvor erwähnte Flansch kann als Anschlag dienen, die Eindringtiefe zu bestimmen und somit den Abstand zwischen dem PTC-Heizelement und dem Boden der U-förmigen Ausnehmung in vorbestimmter Weise zuverlässig einzustellen. Alternativ kann ein solcher Anschlag aber auch durch ein Abstandselement gebildet sein, welches das PTC-Heizelement unterseitig überragt und mit dem Boden der U-förmigen Ausnehmung zusammenwirkt, d.h. daran anliegt.

Mit der vorliegenden Erfindung wird ferner eine elektrische Heizvorrichtung mit einem Heizergehäuse beansprucht, in welchem eine Trennwand eine von einem zu erwärmenden Medium durchströmbare Zirkulationskammer von einer Anschlusskammer trennt. In diese Anschlusskammer ragen elektrische Anschlüsse eines PTC-Heizelementes hinein. Das PTC-Heizelement ist in eine U-förmige Ausnehmung einer Heizrippe eingebracht, die von der Trennwand in die Zirkulationskammer hineinragt. Das PTC-Heizelement hat zumindest ein PTC-Element und beiderseitig daran anliegende Leiterbahnen.

Eine solche elektrische Heizvorrichtung ist beispielsweise aus der EP 1 872 986 A1 bekannt.

Eine elektrische Heizvorrichtung mit verbessertem Wärmeaustrag wird in Anspruch 11 definiert.

Zu den vorteilhaften Wirkungen dieser Ausgestaltung wird auf die vorherige Beschreibung verwiesen. Der verbesserte Wärmeaustrag ergibt sich insbesondere dann, wenn die Heizrippe vollumfänglich von dem zu erwärmenden Fluid umströmt wird, d.h. die Heizrippe umfänglich, vorzugsweise auch stirnseitig in der Zirkulationskammer freiliegt.

Bevorzugte Weiterbildungen der erfindungsgemäßen elektrischen Heizvorrichtung sind in den abhängigen Ansprüchen 12 bis 14 angegeben. Nach Anspruch 12 ist das PTC-Heizelement durch ein Keilelement an die U-förmige Ausnehmung innenseitig angelegt, wobei das Keilelement beschichtet ist. Diese Beschichtung ist zumindest einseitig an dem Keilelement und zwar dort vorgesehen, wo das Keilelement beim Einbringen in die U-förmige Ausnehmung zum Verspannen des PTC-Heizelementes in der U-förmigen Ausnehmung vorbeigleitet. Üblicherweise sind die beiden Hauptseitenflächen des Keilelementes beschichtet, sodass das Keilelement gut an dem PTC-Heizelement einerseits und einer Innenfläche der U-förmigen Ausnehmung andererseits abgleiten kann. Bei der Beschichtung handelt es sich um eine gleitverbessernde Beschichtung, beispielsweise einen PTFE-Gleitlack auf Wasserbasis mit organischem Binder zur Trockenschmierung. Durch die gleitmindernde Beschichtung des Keilelementes werden reproduzierbare Montageergebnisse gewährleistet, da Oberflächenrauigkeiten und dergleichen, die im Rahmen der Herstellung der einzelnen Komponenten variieren können, durch die Beschichtung ausgeglichen werden. So sind im Wesentlichen die gleichen Einbringkräfte notwendig, um das PTC-Heizelement mit vorbestimmter Flächenpressung gegen die Innenflächen der U-förmigen Ausnehmungen anzulegen. Diese Verpressung dient zum einen der guten Ausleitung von Wärme aus dem PTC-Element und in die Innenflächen der U-förmigen Ausnehmung und andererseits der Stromeinleitung von den Kontaktblechen des PTC-Heizelementes in das PTC-Element.

Weitere Einzelheiten und Vorteile der vorliegenden Erfindung ergeben sich aus der nachfolgenden Beschreibung eines Ausführungsbeispiels in Verbindung mit der Zeichnung. In dieser zeigen:
- Figur 1: eine perspektivische Seitenansicht einer Heizrippe einer Heizvorrichtung mit einem ersten Ausführungsbeispiel eines PTC-Heizelementes;
- Figur 2: eine perspektivische Seitenansicht gemäß Figur 1 für das PTC-Element und die daran anliegenden Leiterbahnen des ersten Ausführungsbeispiels;
- Figur 3: eine perspektivische Seitenansicht gemäß den Figuren 1 und 2 eines U-förmigen Gleitblechs des Ausführungsbeispiels;
- Figur 4: eine stirnseitige Schnittansicht des ersten Ausführungsbeispiels eines PTC-Heizelementes;
- Figur 5: eine Längsschnittansicht des ersten Ausführungsbeispiels auf Höhe der Kontaktplatte ;
- Figur 6: eine perspektivische Seitenansicht eines zweiten Ausführungsbeispiels eines PTC-Heizelementes;
- Figur 7: ein Gleitblech des in Figur 6 gezeigten Ausführungsbeispiels und
- Figur 8: eine Querschnittsansicht durch eine Heizrippe mit dem in Figur 6 gezeigten Ausführungsbeispiels eines Heizelementes vor dem Eindringen eines Keilelementes

In der Zeichnung wird mit Bezugszeichen 2 grundsätzlich ein PTC-Heizelement bezeichnet. Bezugszeichen 4 kennzeichnet ein PTC-Element, d.h. den Kaltleiterstein und die Bezugszeichen 6 an den Hauptseitenflächen des PTC-Elementes 4 anliegende Leiterbahnen, die vorliegend als gestanzte Kontaktbleche aus Aluminium gebildet sind.

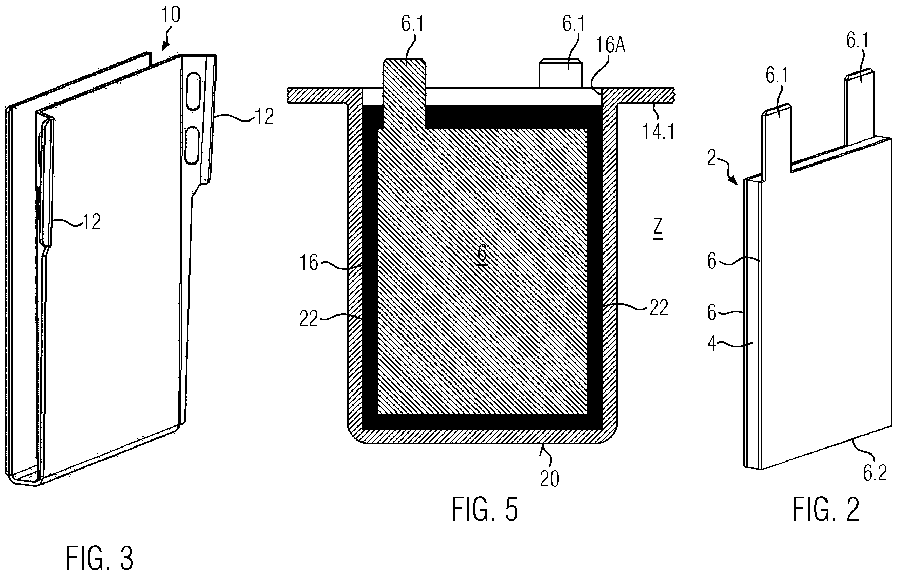

Die Figur 2 lässt die wesentlichen Bestandteile des PTC-Heizelementes 2 erkennen. Das PTC-Element 4 ist beidseitig an seinen Hauptseitenflächen mit dem Kontaktplatten 6 verklebt. Die Verklebung erfolgt insbesondere durch einen elektrisch leitenden Kleber.

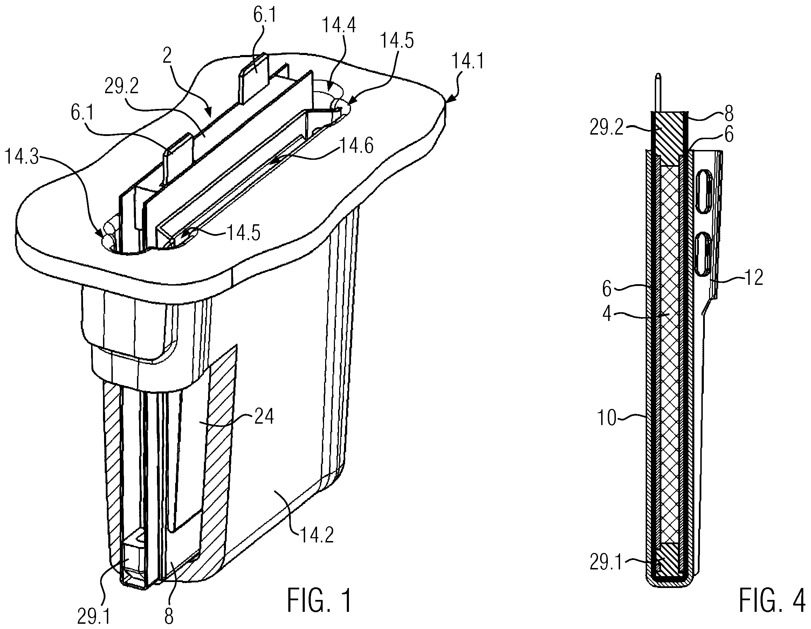

Die so hergestellte Einheit wird mit einer in Figur 4 zuerkennenden Hybridfolie 8 ummantelt. Die Hybridfolie 8 wird beidseitig gegen die Hauptseitenflächen der Kontaktplatten 6 angelegt und stirnseitig, d.h. am unteren Ende des PTC-Elementes 4 umgeschlagen. Durch die Hybridfolie 8 wird das PTC-Element 4 und die daran anliegenden elektrifizierten Kontaktplatten 6 elektrisch nach außen isoliert. Die Hybridfolie 8 besteht üblicherweise aus einer Folie, auf welche eine elektrisch nicht leitende pastöse Masse aufgebracht ist. Die pastöse Masse besteht vorzugsweise aus Silikon und wird besonders bevorzugt aus einer additionsvernetzenden Zwei-Komponenten-Silikonmasse gebildet. In diese Silikonmasse sind Partikel mit guter Wärmeleitfähigkeit in Form von sphärischen Aluminiumoxidpartikeln eingebracht. Die so vorbereitete Hybridfolie 8 wird zunächst ausgehärtet, d.h. das Silikon ist im Wesentlichen vernetzt und damit abgebunden, bevor sie um das PTC-Heizelement 2 gelegt wird. Die Hybridfolie 8 hat keine erheblichen adhäsiven Eigenschaften.

Nachdem die Hybridfolie 8 um die Leiterbahnen 6 gelegt worden ist, wird diese Einheit in ein U-förmiges Gleitblech 10 eingelegt, welches in Figur 3 gezeigt ist. Das Gleitblech 10, die Hybridfolie 8 sowie die Kontaktplatten 6 und das PTC-Heizelement 4 haben in etwa die selbe Längserstreckung, d.h. schließen stirnseitig jeweils in etwa bündig zueinander ab. Vor dem U-förmigen Umbiegen des Gleitblechs 10 sind die freien Enden stanz- und biegebearbeitet, um randseitig an dem Gleitblech 10 Abstandshalter 12 auszuformen.

In Figur 1 ist mit Bezugszeichen 14 ein Bereich eines Gehäuseoberteils 14 eingezeichnet, als gekennzeichnet, der auf ein wannenförmiges Gehäuseunterteil aufgesetzt werden kann, um eine Zirkulationskammer für das zu erwärmende flüssige Medium auszubilden, wie dies aus der EP 1 872 989 A1 bekannt ist. Das Gehäuseoberteil 14 hat eine sich üblicherweise parallel zu dem Bogen des Gehäuseunterteils erstreckende Trennwand 14.1 sowie üblicherweise mehrere rechtwinklig von dieser Trennwand 14.1 abragende Heizrippen 14.2. Die Trennwand 14.1 und die Heizrippe 14. 2 sind üblicherweise in einem einheitlichen Bauteil verwirklicht. Die Heizrippe 14.2 hat beidseitig benachbart zu dem PTC-Element 4 zwei Öffnungen, nämlich eine Einbringöffnung 14.3 und eine Entlüftungsöffnung 14.4, die sich jeweils zu einer mit Bezugszeichen 18 gekennzeichneten Einbringöffnung, die durch die Heizrippe 14.2 gebildet wird, öffnen und auf der der U-förmigen Ausnehmung 18 gegenüberliegenden Seite konkav ausgeformt sind. Eine die U-förmige Ausnehmung 18 begrenzende Kante, die zwischen der Trennwand 14.1 und der U-förmigen Ausnehmung 18 vorgesehen ist, wird von Führungsrillen 14.5 durchsetzt, die sich entlang der Einführrichtung des PTC-Heizelements 2 in die U-förmige Ausnehmung 18 erstrecken. Im gefügten Zustand (vgl. Figur 1) greifen die Abstandshalter 12 des Gleitblechs 10 in diese Führungsrille 14.5 ein, wodurch das PTC-Heizelement 2 sowohl in Längsrichtung der U-förmigen Ausnehmung 18 als auch in Querrichtung dazu positioniert ist und eine Keilelementaufnahmeöffnung 14.6 frei gestemmt bleibt, sodass das Keilelement leicht zwischen einer Innenfläche U-förmigen Ausnehmung und das Gleitblech 10 von oben eingeführt werden kann.

Unterhalb der jeweiligen Öffnungen 14.3 und 14.4 und zwischen der Stirnseite und gegenüberliegenden Stirnflächen 16 der U-förmigen Ausnehmung 18 der Heizrippe 14.2 befindet sich ein mit Bezugszeichen 22 gekennzeichneter stirnseitiger Freiraum, nachdem das in Figur 1 gezeigte Ausführungsbeispiel eines PTC-Heizelementes 2 in die U-förmige Ausnehmung 18 eingebracht wurden ist (vgl. Figur 5). Der Abstand zwischen dem PTC-Heizelement 2 und den Stirnflächen 16 ist dabei durch die Abstandshalter 12 vorgegeben.

Nach dem Einbringen des PTC-Heizelementes 2 in die U-förmige Ausnehmung 18 wird zunächst ein in Figur 1 teilweise zu erkennendes Keilelement 24 durch die Keilelementaufnahmeöffnung 14.6 eingebracht und innerhalb der U-förmigen Ausnehmung 18 verspannt. Dadurch legen sich die Hauptseitenflächen des Gleitblechs 10 auf der einen Seite unmittelbar und auf der anderen Seite mittelbar unter Zwischenlage des Keilelementes 24 an die Innenflächen der U-förmigen Ausnehmung. Danach ist das PTC-Heizelement 2 wärmeleitend mit den Innenflächen der U-förmigen Ausnehmung 18 verspannt. Gegenüber den sich rechtwinklig hierzu erstreckenden Stirnflächen 16 besteht danach noch keine Kontaktierung, die eine Wärmeleitung allein in Längsrichtung des PTC-Heizelementes 2 erlaubt. Hierzu wird eine mit Bezugszeichen 26 gekennzeichnete wärmeleitende Masse durch die Einbringöffnung 14.3 eingefüllt. Diese füllt den Freiraum 22 unterhalb der Einbringöffnung 14.3 und zwischen der Stirnfläche 16 und der gegenüberliegenden Stirnfläche des PTC-Heizelementes 2 aus, durchsetzt einen Spalt zwischen dem unteren Ende des PTC-Heizelementes 2 und einem Boden 28 der Heizrippe 14.2, sodass auch hier verbleibende Hohlräume durch die wärmeleitende Masse 26 ausgefüllt werden, und steigt schließlich an der gegenüberliegenden Seite in den Freiraum 22 zwischen dem PTC-Heizelement 2 und der Stirnfläche 16 auf. Dabei treibt die flüssige Masse 26 Luft vor sich her, die durch die Entlüftungsöffnung 14.4 ausgetrieben wird. Die wärmeleitende Masse 26 wird entweder mit einem vorbestimmten Volumen eingefüllt oder aber der Zufluss von wärmeleitender Masse 26 wird gestoppt, wenn die Masse aus der Entlüftungsöffnung 14.4 hervorquillt bzw. sich in dieser zeigt. Danach sind sämtliche Hohlräume eliminiert. Es ergibt sich eine sehr gute wärmmäßige Anbindung des PTC-Heizelements 2 auch zu den Stirnflächen 16 und dem Boden 20. der Heizrippe 14.2. Darüberhinaus wird die Masse 26 auch über dem PTC-Element 4 und zwischen den das PTC-Element 4 oberseitig überragenden Anschlussfahnen 6.1 angeordnet, sodass auch dort keine freie Luft-und Kriechstrecke verbleiben kann. Wie Figur 5 zu erkennen gibt, überragt die Hybridfolie 8 das PTC-Element 4 oberseitig.

Danach wird das PTC-Heizelement 2 über die Anschlussfahnen 6.1 an eine Stromquelle angeschlossen. Die sich hierbei ergebende Erwärmung führt zum beschleunigten Aushärten der wärmeleitfähigen Masse 26, die wie die wärmeleitfähige Masse der Hybridfolie 8 ausgebildet ist. Danach ist das PTC-Heizelement 2 vollumfänglich unmittelbar wärmeleitend mit den Gegenflächen der U-förmigen Ausnehmung 18 gekoppelt. Auch bodenseitig ist eine Wärmeleitung zwischen dem PTC-Heizelement 2 und dem Boden 28 der U-förmigen Ausnehmung gegeben. Somit ergibt sich eine zu fünf Seiten wirksame thermische Kopplung des PTC-Heizelementes 2 in der U-förmigen Ausnehmung.

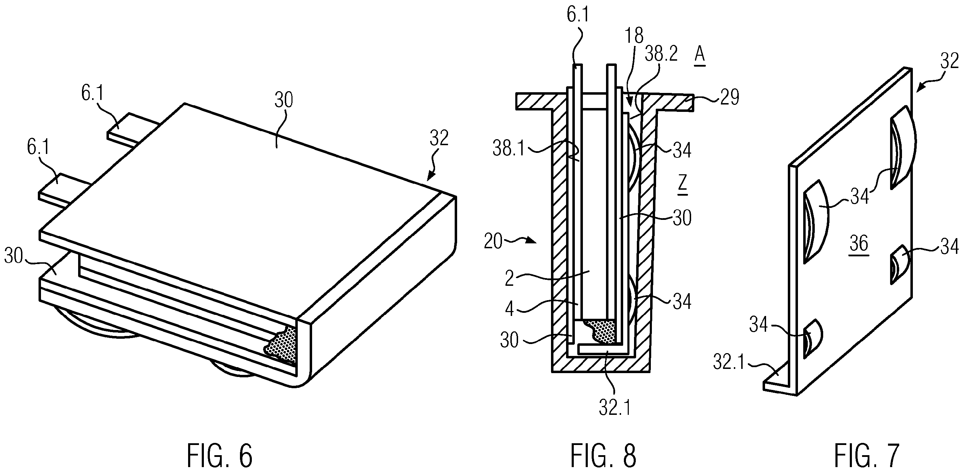

Wie aus Figur 8 ersichtlich, liegt der Gehäuseoberteil 14 an der Oberseite einer Trennwand 29 auf und ist hiermit im Wesentlichen dichtend verbunden. Die Trennwand 14.1 ist nur unvollständig dargestellt. Insofern wird auf die vorherige Beschreibung der vorliegenden Anmelderin beispielsweise in EP 1 872 986 A1 verwiesen. Es ist aber ersichtlich, dass die Heizrippe 14.2 vollumfänglich in der Zirkulationskammer freiliegt. Darüberhinaus liegt auch ein sich parallel zu dem Boden 28 erstreckender Boden 20. der Heizrippe in der mit Bezugszeichen Z angedeuteten Zirkulationskammer frei. Auf der in Bezug auf die Trennwand 14.1 gegenüberliegenden Seite ist eine mit Bezugszeichen A angedeutete Anschlusskammer vorgesehen, in welcher vor allem die Anschlussfahnen 6.1 freiliegen, um das PTC-Heizelement 2 elektrisch an eine Stromversorgung und eine Steuerung anzuschließen.

Tatsächlich zeigen die Figuren 1 und 4 ein gegenüber der Figur 2 leicht abgewandeltes Ausführungsbeispiel eines PTC-Heizelementes 2. Bei diesem PTC-Heizelement sind ober- und unterseitig relativ zu dem PTC-Element 4 Leisten aus einem elektrisch isolierenden Werkstoffen, wie beispielsweise Kunststoff vorgesehen. Eine untere Leiste 29.1 ist durch Umspritzen mit dem Kontaktplatten 6 verbunden, die hierzu im Bereich der unteren Leiste 29.1 eine Perforation aufweisen könnten, um das flüssige Kunststoffmaterial, welches die Leiste 29.1 ausbildet, formschlüssig mit der entsprechenden Kontaktplatte zu verbinden (vgl. Figur 4 linke Kontaktplatte 6, unten). Figur 1 zeigt ferner eine obere Leiste 29.2, die seitliche Aussparungen hat, durch welche die Anschlussfahnen 6.1 hindurch geleitet sind. Die Leisten 29.1 bzw. 29.2 fluchten jeweils mit der Oberfläche der Kontaktplatten 6, sodass sich eine ebene Anlagefläche für die Hybridfolie 8 ergibt.

Die Figuren 6-8 zeigen ein alternatives Ausführungsbeispiel der vorliegenden Erfindung. Das PTC-Element 4 und die daran anliegenden Kontaktplatten 6 sind gegenüber dem vorher diskutierten Ausführungsbeispiel identisch. Die Hybridfolie 8 ist in Form von zwei Hybridfolienplatten 30 zugeschnitten und überragt die Kontaktplatten 6 und das PTC-Element 4 allseitig. Das Gleitblech 32 ist L-förmig umbogen und lediglich an einer Seite vorgesehen, d.h. liegt lediglich an einer der beiden Hybridfolienplatten 30 an. Durch Stanzen und Biegen sind an dem Gleitblech 32 vier Federvorsprünge 34 vorgesehen, die zwischen sich eine Gleitfläche 36 einschließen und diese Gleitfläche 36 überragen.

Wie Figur 9 verdeutlicht, wird das PTC-Element 2 durch diese Federvorsprünge 34 nach dem Einbringen in die U-förmige Ausnehmung 18 in einer Richtung quer zu der Einbringrichtung in vorbestimmter Weise relativ zu Innenflächen 38.1 und 38.2 der U-förmigen Ausnehmung 18 positioniert. Dabei liegt das PTC-Heizelement mit einer Hybridfolienplatte 30.1 unmittelbar an der Innenfläche 38.1 an, wohingegen auf der gegenüberliegenden Seite die Hybridfolienplatte 30 und die sich parallel hierzu erstreckende Gleitfläche 36 über die Federvorsprünge 34 auf Abstand zu der anderen Innenfläche 38.2 gehalten werden.

Ein unterer Schenkel 32.1 bildet einen Anschlag, der mit dem Boden 28 der Heizrippe 14.2 innen zusammenwirkt und zwischen diesem und dem PTC-Element 4 einen Freiraum lässt, in den die wärmeleitfähige Masse 26 beim Verfüllen der U-förmigen Ausnehmung 18 eintreten kann, um diese auszufüllen.

Danach wird in die U-förmige Ausnehmung 18 das zuvor diskutierte Keilelement 24 eingeschoben, welches das PTC-Heizelement 2 in der U-förmigen Ausnehmung gegen die Innenflächen 38.1 und 38. 2 verspannt. Schließlich wird von oben wärmeleitfähige Masse in die U-förmige Ausnehmung 18 eingefüllt, um sämtliche verbleibende Freiräume innerhalb der U-förmigen Ausnehmung mit wärmeleitender Masse auszufüllen und verbleibende Hohlräume zu schließen.

### Bezugszeichenliste

- 2: PTC-Heizelement
- 4: PTC-Element
- 6: Leiterbahnen/Kontaktplatte
- 6.1: Anschlussfahne
- 8: Hybridfolie
- 10: Gleitblech
- 12: Abstandshalter
- 14: Gehäuseoberteil
- 14.1: Trennwand
- 14.2: Heizrippe
- 14.3: Einbringöffnung
- 14.4: Entlüftungsöffnung
- 14.5: Führungsrillen
- 14.6: Keilelementaufnahmeöffnung
- 16: Stirnfläche
- 18: U-förmige Ausnehmung
- 20.: Boden der Heizrippe
- 22: Stirnseitiger Freiraum
- 24: Keilelement
- 26: Wärmeleitfähige Masse
- 28: Boden
- 29: Trennwand
- 29.1: untere Leiste
- 29.2: obere Leiste
- 30: Hybridfolienplatte
- 32: Gleitblech
- 32.1: Unterer Schenkel
- 34: Federvorsprung
- 36: Gleitfläche
- 38.1: Innenfläche
- 38.2: Innenfläche
- A: Anschlusskammer
- Z: Zirkulationskammer

## Patentansprüche

1. Verfahren zur Herstellung einer elektrischen Heizvorrichtung insbesondere für ein Kraftfahrzeug, bei dem ein PTC-Heizelement (2) mit zumindest einem PTC-Element (4), das zwischen Leiterbahnen (6) vorgesehen ist, in eine U-förmige Ausnehmung (18) eines Heizergehäuses (20) eingesetzt, wobei die U-förmige Ausnehmung (18) durch eine Heizrippe (14.2) gebildet ist, die in eine Zirkulationskammer des Heizergehäuses hineinragt, und das PTC-Heizelement (2) durch Einbringen eines Keilelementes (24) in die U-förmige Ausnehmung (18) verkeilt und wärmeleitend mit gegenüberliegenden, die U-förmige Ausnehmung (18) begrenzenden Innenflächen (38.1, 38.2) kontaktiert wird,
**dadurch gekennzeichnet,**
**dass** nach dem Einsetzen des PTC-Heizelementes (2) eine wärmeleitende Masse (26) in die U-förmige Ausnehmung (18) zwischen das PTC-Element (4) und die genüberliegende Innenflächen (38.1, 38.2) verbindende Stirnflächen (16) der U-förmigen Ausnehmung (18) eingebracht wird.

2. Verfahren nach Anspruch 1, **dadurch gekennzeichnet, dass** das PTC-Heizelement (2) mit einem Gleitblech (10) verbunden wird, das daran angeformte Abstandshalter (12) aufweist, durch die eine Aufnahmeöffnung (14.6) für ein Keilelement (24) zwischen der U-förmigen Aufnahme (18) und dem PTC-Heizelement (2) freigedrückt wird.

3. Verfahren nach Anspruch 2, **dadurch gekennzeichnet, dass** das PTC-Heizelement (2) durch formschlüssige Anlage des Abstandshalters (12) in der U-förmigen Ausnehmung (18) positioniert wird.

4. Verfahren nach Anspruch 2 oder 3, **dadurch gekennzeichnet, dass** die wärmeleitende Masse (26) durch eine Einbringöffnung (14.3) in die U-förmige Ausnehmung (18) eingebracht wird.

5. Verfahren nach einem der Ansprüche 2 bis 4, **dadurch gekennzeichnet, dass** beim Einbringen der wärmeleitenden Masse (26) durch die Einbringöffnung (14.3) Luft über eine Entlüftungsöffnung (14.4) aus der U-förmigen Ausnehmung (18) entweicht.

6. Verfahren nach einem der vorherigen Ansprüche, **dadurch gekennzeichnet, dass** die wärmeleitende Masse (26) in der U-förmigen Ausnehmung (18) vernetzt ist.

7. Verfahren nach einem der vorherigen Ansprüche, **dadurch gekennzeichnet, dass** das PTC-Heizelement (2) zum beschleunigten Vernetzen der wärmeleitfähigen Masse (26) in der U-förmigen Ausnehmung (18) bestromt wird.

8. Verfahren nach einem der vorherigen Ansprüche, **dadurch gekennzeichnet, dass** das PTC-Heizelement (2) in einem vorbestimmten Abstand zu zumindest einer der Innenflächen (38.1, 38.2) gehalten wird, bevor die wärmeleitfähige Masse (26) in die U-förmige Ausnehmung (18) eingebracht wird.

9. Verfahren nach einem der vorherigen Ansprüche, **dadurch gekennzeichnet, dass** das PTC-Heizelement (2) durch zumindest ein Federelement (34) in einem vorbestimmten Abstand zu einer der Innenflächen (38.2) gehalten wird.

10. Verfahren nach einem der vorherigen Ansprüche, **dadurch gekennzeichnet, dass** das PTC-Heizelement (2) durch einen mit dem PTC-Heizelement (2) verbundenen Anschlag auf Abstand zu einem Boden (28) der U-förmigen Ausnehmung (18) gehalten wird.

11. Elektrische Heizvorrichtung mit einem Heizergehäuse, in welchem eine Trennwand eine von einem zu erwärmenden Medium durchströmbare Zirkulationskammer (Z) von einer Anschlusskammer (A) trennt, in der elektrische Anschlüsse (6.1) eines in eine U-förmige Ausnehmung (18) einer von der Trennwand in die Zirkulationskammer (Z) hineinragenden Heizrippe (14.2) eingebrachten PTC- Heizelementes (2) mit zumindest einem PTC-Element (4) und beidseitig daran anliegenden Leiterbahnen (6) freiliegen, wobei zwischen dem PTC-Heizelement (2) und den Innenwänden (16) der U-förmigen Ausnehmung (18) ein Keilelement vorgesehen ist, welches das PTC-Heizelement wärmeleitend in der U-förmigen Ausnehmung (18) verspannt,
**dadurch gekennzeichnet,**
**dass** zwischen dem PTC-Heizelement (2) und den Innenwänden (38.1, 38.2) der U-förmigen Ausnehmung (18) eine wärmeleitende Masse (26) vorgesehen ist, die zwischen das PTC-Element (4) und die genüberliegenden Innenflächen (38.1, 38.2) verbindende Stirnflächen (16) der U-förmigen Ausnehmung (18) eingebracht ist.

12. Elektrische Heizvorrichtung nach Anspruch 11 **dadurch gekennzeichnet, dass** das PTC-Heizelement (2) durch ein beschichtetes Keilelement (24) wärmeleitend an gegenüberliegenden Innenflächen (18.1, 18.2) der U-förmigen Ausnehmung (18) angelegt ist.

13. Elektrische Heizvorrichtung nach Anspruch 11 oder 12, **dadurch gekennzeichnet, dass** die beiden Leiterbahnen (6) außenseitig mit einer elektrischen Isolierschicht (8; 30) belegt sind.

14. Elektrische Heizvorrichtung nach einem der Ansprüche 11 bis 13, **dadurch gekennzeichnet, dass** die Heizrippe (14.2) vollumfänglich in der Zirkulationskammer (Z) freiliegt.

## Claims

1. A method for manufacturing an electrical heating device, in particular for a motor vehicle, in which a PTC heating element (2) with at least one PTC element (4) that is provided between conductor paths (6) is inserted into a U-shaped recess (18) of a heater housing (20), wherein the U-shaped recess (18) is formed by a radiator (14.2), which protrudes into a circulation chamber of the heater housing, and the PTC heating element (2) is wedged into the U-shaped recess (18) by inserting a wedge element (24) and is put in heat conducting contact with opposing interior surfaces (38.1, 38.2) defining the U-shaped recess (18),
**characterized in that**
after inserting the PTC heating element (2), a heat conducting mass (26) is introduced into the U-shaped recess (18) between front surfaces (16) of the U-shaped recess (18) joining the PTC element (4) and the opposite interior surface (38.1, 38.2).

2. The method according to claim 1, **characterized in that** the PTC heating element (2) is connected with a slide plate (10) that comprises spacers (12) formed thereon, by which a receiving opening (14.6) for a wedge element (24) is pressed open between the U-shaped recess (18) and the PTC heating element (2).

3. The method according to claim 2, **characterized in that** the PTC heating element (2) is positioned in the U-shaped recess (18) by a positive fit of the spacer (12).

4. The method according to claim 2 or 3, **characterized in that** the heat conducting mass (26) is introduced into the U-shaped recess (18) through an introduction opening (14.3).

5. The method according to claim 2 to 4, **characterized in that** during the introduction of the heat conducting mass (26) through the introduction opening (14.3), air escapes from the U-shaped recess (18) by way of a vent opening (14.4).

6. The method according to one of the afore-mentioned claims, **characterized in that** the heat conducting mass (26) in the U-shaped recess (18) is cross-linked.

7. The method according to one of the afore-mentioned claims, **characterized in that** the PTC heating element (2) is energized for an accelerated cross-linking of the heat conducting mass (26) in the U-shaped recess (18).

8. The method according to one of the afore-mentioned claims, **characterized in that** the PTC heating element (2) is held at a predetermined distance from at least one of the interior surfaces (38.1, 38.2) before the heat conducting mass (26) is introduced into the U-shaped recess (18).

9. The method according to one of the afore-mentioned claims, **characterized in that** the PTC heating element (2) is held at a predetermined distance from one of the interior surfaces (38.2) by at least one spring element (34).

10. The method according to one of the afore-mentioned claims, **characterized in that** the PTC heating element (2) is held at a distance from a bottom (28) of the U-shaped recess (18) by a limit stop joined with the PTC heating element (2).

11. An electrical heating device with a heater housing, in which a partition wall separates a circulation chamber (Z), through which a medium to be heated can flow, from a connection chamber (A), in which electrical connections (6.1) of a PTC heating element (2) introduced into a U-shaped recess (18) of a radiator (14.2) protruding from the partition wall into the circulation chamber (Z) are exposed with at least one PTC element (4) and conductor paths (6) adjacent to it on both sides, wherein
a wedge element is provided between the PTC heating element (2) and the inner walls (16) of the U-shaped recess (18), which braces the PTC heating element in a heat conductive manner in the U-shaped recess (18),
**characterized in that**
a heat conducting mass (26) is provided between the PTC heating element (2) and the inner walls (38.1, 38.2) of the U-shaped recess (18), said mass being introduced between the PTC element (4) and the front surfaces (16) of the U-shaped recess (18) joining the opposing interior surfaces (38.1, 38.2).

12. The electrical heating device according to claim 11, **characterized in that** the PTC heating element (2) rests in a heat conducting manner on opposing interior surfaces (18.1, 18.2) of the U-shaped recess (18) by way of a coated wedge element (24).

13. The electrical heating device according to claim 11 or 12, **characterized in that** the two conductor paths (6) are overlaid on the outside with an electrically insulating layer (8; 30).

14. The electrical heating device according to claim 11 to 13, **characterized in that** the radiator (14.2) is entirely exposed in the circulation chamber (Z).

## Revendications

1. Procédé de fabrication d'un dispositif de chauffage électrique, en particulier pour un véhicule automobile, où un élément de chauffage PTC (2) avec au moins un élément PTC (4) qui est prévu entre deux pistes conductrices (6) est inséré dans une cavité (18) en forme de U d'un boîtier de chauffage (20), où la cavité (18) en forme de U est formée par un segment de radiateur (14.2) qui fait saillie dans une chambre de circulation du boîtier de chauffage et l'élément de chauffage PTC (2) est calé dans la cavité en forme de U (18) par insertion d'un élément en coin (24) et est mis en contact thermiquement conducteur avec des surfaces intérieures (38.1, 38.2) opposées délimitant la cavité en forme de U (18),
**caractérisé en ce que**
après l'insertion de l'élément de chauffage PTC (2), une masse (26) thermiquement conductrice est introduite dans la cavité en forme de U (18) entre l'élément PTC (4) et les surfaces frontales (16) de la cavité en forme de U (18) reliant les surfaces intérieures (38.1, 38.2) opposées.

2. Procédé selon la revendication 1, **caractérisé en ce que** l'élément de chauffage PTC (2) est relié avec une plaque glissière (10) qui comporte des écarteurs (12) formés sur celle-ci, par lesquels une ouverture de réception (14.6) pour un élément en coin (24) est libérée par pression entre le logement en forme de U (18) et l'élément de chauffage PTC (2).

3. Procédé selon la revendication 2, **caractérisé en ce que** l'élément de chauffage PTC (2) est positionné dans la cavité en forme de U (18) par un agencement par liaison de forme de l'écarteur (12).

4. Procédé selon la revendication 2 ou 3, **caractérisé en ce que** la masse (26) thermiquement conductrice est introduite dans la cavité en forme de U (18) par une ouverture d'introduction (14.3).

5. Procédé selon l'une des revendications 2 à 4, **caractérisé en ce que** lors de l'introduction de la masse (26) thermiquement conductrice à travers l'ouverture d'introduction (14.3), de l'air s'échappe de la cavité en forme de U (18) à travers un évent (14.4).

6. Procédé selon l'une des revendications précédentes, **caractérisé en ce que** la masse (26) thermiquement conductrice est réticulée dans la cavité en forme de U (18).

7. Procédé selon l'une des revendications précédentes, **caractérisé en ce que** l'élément de chauffage PTC (2) est mis sous tension pour accélérer la réticulation de la masse (26) thermiquement conductrice dans la cavité en forme de U (18).

8. Procédé selon l'une des revendications précédentes, **caractérisé en ce que** l'élément de chauffage PTC (2) est maintenu à une distance prédéterminée d'au moins une des surfaces intérieures (38.1, 38.2) avant l'introduction de la masse (26) thermiquement conductrice dans la cavité en forme de U (18).

9. Procédé selon l'une des revendications précédentes, **caractérisé en ce que** l'élément de chauffage PTC (2) est maintenu à une distance prédéterminée de l'une des surfaces intérieures (38.2) par au moins un élément ressort (34).

10. Procédé selon l'une des revendications précédentes, **caractérisé en ce que** l'élément de chauffage PTC (2) est maintenu à distance d'un fond (28) de la cavité en forme de U (18) par une butée reliée à l'élément de chauffage PTC (2).

11. Dispositif de chauffage électrique avec un boîtier de chauffage, dans lequel une paroi de séparation sépare une chambre de circulation (Z), dans laquelle peut circuler un fluide à chauffer, d'une chambre de connexion (A), dans laquelle des connexions électriques (6.1) d'un élément de chauffage PTC (2), introduit dans une cavité en forme de U (18) d'un segment de radiateur (14.2) faisant saillie dans la chambre de circulation (Z) à partir de la paroi de séparation, sont exposées avec au moins un élément PTC (4) et des pistes conductrices (6) adjacentes des deux côtés, où
un élément en coin est prévu entre l'élément de chauffage PTC (2) et les parois intérieures (16) de la cavité en forme de U (18), ledit élément en coin serrant l'élément de chauffage PTC de manière thermiquement conductrice dans la cavité en forme de U (18),
**caractérisé en ce que**
une masse (26) thermiquement conductrice est prévue entre l'élément de chauffage PTC (2) et les parois intérieures (38.1, 38.2) de la cavité en forme de U (18), ladite masse étant introduite entre l'élément PTC (4) et les surfaces frontales (16) de la cavité en forme de U (18) reliant les surfaces intérieures (38.1, 38.2) opposées.

12. Dispositif de chauffage électrique selon la revendication 11, **caractérisé en ce que** l'élément de chauffage PTC (2) est mis en butée thermiquement conductrice contre des surfaces intérieures (18.1, 18.2) opposées de la cavité en forme de U (18) par un élément en coin (24) revêtu.

13. Dispositif de chauffage électrique selon la revendication 11 ou 12, **caractérisé en ce que** les deux pistes conductrices (6) sont recouvertes d'une couche électriquement isolante (8 ; 30) sur leur côté extérieur.

14. Dispositif de chauffage électrique selon l'une des revendications 11 à 13, **caractérisé en ce que** le segment de radiateur (14.2) est entièrement exposé dans la chambre de circulation (Z).
